(19) Europäisches Patentamt
European Patent Office
Office européen des brevets

(11) Publication number: **0 438 843 A1**

## EUROPEAN PATENT APPLICATION

(21) Application number: **90300735.9**

(22) Date of filing: **24.01.90**

(51) Int. Cl.⁵: **G06F 15/40, G06F 9/44**

(43) Date of publication of application:
**31.07.91 Bulletin 91/31**

(84) Designated Contracting States:
**DE FR GB**

(71) Applicant: **International Business Machines Corporation**
**Old Orchard Road**
**Armonk, N.Y. 10504(US)**

(72) Inventor: **Sagawa, James Mamoru**
**1906 Stockbridge Avenue**
**Redwood City, CA 94061(US)**

(74) Representative: **Bailey, Geoffrey Alan**
**IBM United Kingdom Limited Intellectual Property Department Hursley Park**
**Winchester Hampshire SO21 2JN(GB)**

(54) **Repository Application generator.**

(57) A repository-based method for recursively prototyping a required repository data design from a list of application-provided objects (entities, relationships, or aggregations). In this regard, the repository provides an information set including entity-relationship definitions and occurrences. Relatedly, the information set is represented by an aggregation wherein each aggregation has an entity-relationship hierarchy consisting of a root identity and zero or more relationships. The method responds to a functional specification for object generation in which templates are both formed and populated from occurrences in the supplied information. The templates are not prestored in the repository but are formed dynamically.

FIG. 1

# REPOSITORY APPLICATION GENERATOR

This invention relates to automatic programming and, more particularly, to the utilization of automatic programming in the context of a layered architecture of applications running on top of a repository.

For purposes of this invention, "automatic programming" is taken to mean any data-driven process for generating machine-executable code wherein (1) data defines or parameterizes the process output or other objects, (2) the process either generates executable code or finds an optimal compile path therethrough, and (3) the process and objects are transparent to the user. The term "application program generator" (APG) is used as a synonym.

The ability to write programs directly in mathematical notation was a notable advance and was one of the first instances of automatic programming (see J. E. Nicholls, "The Structure and Design of Programming Languages", copyright 1975 by Addison-Wesley Publishing Co., chapter 9, referencing R. Goodman, "Annual Review in Automatic Programming", Vol. 1, copyright 1960 by Pergamon Press). Reference should also be made to Polivka and Pakin, "APL: The Language and Its Usage", copyright 1975 by Prentice Hall, Inc.; and "EUREKA: The Solver", copyright 1987 by Borland International, Inc., for illustrations of interpreter-based programs written directly in modified forms of mathematical notation.

Borta, U.S. Patent 4,536,840, "Autogrammer", issued August 20, 1985, discloses the use of an application program generator to provide runtime executable code constituting a storage file access method. Borta describes the generation of files, descriptors, and the use of associated file macros of CREATE, READ, WRITE, and DELETE. Borta's executable code for file accessing is created in response to user-supplied parameters.

Interactive APG systems, including expert systems, operate in a DEFINE, BUILD, or GENERATE mode, followed at a subsequent time by an EXECUTE or CONSULT mode.

Next, consideration is given to functional aspects of layered computational architecture. These include layering of functions between applications and the physical computing layer, views and modelling of storage and data, and object-oriented programming systems.

Up to the mid-1950s, CPUs did not have many resident services commonly available to all applications. Rather, CPU-executable applications had to include as a part thereof many of the ordinary data storage, display, and communication functions.

During the mid-1950s and 1960s, the increased physical capacity of systems permitted:

(a) the excising of selected automatic or callable functions common to executing applications, and

(b) the aggregation and insertion of said excised functions as a first layer of indirection between executing applications and the bottom layer of physical computing resources.

This first inserted layer, always resident in the CPU, was termed an "operating system" (OS). Although highly evolved since that period, an OS typically permits (1) system start, restart, and recovery; (2) the scheduling/ dispatching of tasks and resource allocation; and (3) security and access authorization.

During the 1970s and 1980s, further technical advances in the physical computing layer permitted drastic economies of scale, both in computation and storage. This led to system-managed description and access of storage and data, and the virtualized manipulation of resources.

However, there is a distinction between making effective use of storage space wherein data may well be treated as hauled cargo and relating bits and pieces of information in delicate computations used by executing applications. That is, there arose a perceived need to interpose a second layer of indirection between an application and the OS which would be responsive to an application's view of the data. Further, this view should eliminate concern with the physical details creating, amending, or retrieving the data.

This second layer is denominated a "data base management system" (DBMS), wherein data is organized and accessed through a well-defined syntax and language. Illustratively, one class satisfying the objects of the second layer is to be found in relational DBMS Database 2, SQL, and QBE access languages such as are described by C. J. Date, "An Introduction to Database Systems", Vol. 1, 4th Edition, copyright 1986 by Addison-Wesley Publishing Co.

In a relational data base such as Database 2 , data is conceived as tables created, maintained, and manipulated by the set-level language SQL. Among the verbs supporting these table operations are CREATE TABLE, DROP TABLE, SELECT, UPDATE, DELETE, and INSERT rows/columns of data. However, even though the flexibility of table contents is maximized, the types of questions posable through the SQL filter are limited. This limitation affects the degree to which there exists a match between an application-possible data request and the view of the data provided by the DBMS.

In contemporary parlance, access to resources is provided by the layers in the form of defined programmable interfaces. Thus, an application might GET or PUT information from or to storage specified by a name or pointer. The GET/PUT constitutes a high-level interface by which the layers construct an access path to the data by local computation or interpretation. Self-evidently, an application being able to "SELECT a list of EMPLOYEES whose LAST NAMES start with B and who are either RIGHT-HANDED or HEIGHT <7'" has a data view richer than GET/PUT, as well as one for which the storage access path details are transparent.

Advantageously, the insertion of two layers of indirection between executing applications and the physical layer has increased (a) the robustness of interconnection to a bewildering variety of computing, storage, display, and communication resources; and (b) the transparency of excised and aggregated functions.

However, each application still has to recreate the information, data definitions, and relationships because the current views and accesses are both limited and largely inflexible. There has been some recognition of this fact to be found in the use of so-called "data dictionaries". The data dictionaries or system catalogs comprise "meta-data" and describe other objects in the system other than "raw" data, i.e., data about data.

Various learned papers have proposed either the insertion of a third layer or alternative data model and views for the second layer. This addition or alternative is focused on information definitions and relationships permitting complexity, growth, and reuse of the objects, entities, and relations by applications involved. That is, DBMSs, relational or otherwise, have limited understanding of the semantic value of data, i.e., what does the data mean. This has led to the formation of the Entity/ Relationship (E/R) semantic model of data as described, for example, by P. S. Chen, "The Entity Relationship Model - Towards a Unified View of Data", Vol. 1, No. 1, ACM Transactions on Database Systems, March 1976.

The E/R model has been embodied in the data dictionaries. It has now been expanded and enriched, and inserted as a third layer in the form of a Repository Manager layer.

A model requires a set of objects, operators for manipulating the objects, and a set of integrity rules. The usual E/R model defines the objects as entities, attributes, and relationships. Conveniently, they have grammatical or part-of-speech analogs. Thus, "entities" are representations (names) of persons, places, things, events, and concepts, i.e., nouns. "Attributes" are representations of the properties of entities, i.e., adjectives. "Relationships" are associations among entities, i.e., verbs. Note that "relationships" include associations of relationships, i.e., gerunds. "Aggregations" of entities and relationships are abstracted to higher levels of categorization termed "entity aggregations" denominated by abstract noun or role designations.

A "repository" is an organized, shared collection of information relating to data processing constructs. A "repository data model" is a formal E/R description of the data structure and format held by the Repository Manager in the repository. The function of the management of such a repository is to apply three independently expressed "views" (conceptual, logical, and storage) to the tasks of specifying, implementing, and sharing repository information to application-specifiable functions. In this regard, the "Conceptual View" is an abstract E/R model of data and functions. The "Logical View" is that part of the E/R model data and functions in which the data is described by templates and template trees, and the function is derived from processing logic and policies. Lastly, the "Storage View" treats the mapping of entities and relationships into the underlying DBMS or storage system.

There are parallels between an Object-oriented Programming System (OOPS) and an E/R-based repository. In this regard, an OOPS is one in which computation is accomplished by sending messages to objects. The result of sending a message to an object is also an object. In an OOPS, data is stored as objects with automatic deallocation, processing is effectuated by sending messages to objects, and object behaviour is described in classes. Paradigmatically, an OOPS is one supportive of the object properties of abstraction, encapsulation, inheritance, and polymorphism.

By its nature, the E/R modelling in a repository is classification like wherein object behaviour is described in classes. More nearly, objects are typed so that object instances assume the attributes of the type and inherit attributes of supertypes. Thus, an "object type" in a repository is a high-level abstraction of a data construct and is defined by the functions (methods) available to operate on the data. For example, a "Source Program Object Type" might be defined by the methods "Compile, Edit, and Delete". In a repository, a "method" is a function call interface available for all objects of a specified object type.

The Repository Manager provides management facilities for an object whose data is either in entities and relationships (termed "object with internal data body") or in files which are not known to the Repository Manager (termed "object with external data body"). An object may also have a "mixed body" with data in both E/R and external files. The term "object" is often used generically in the OOPS sense of the term, or for the Repository Manager object concept. In subsequent discussion, if the context does not clearly indicate the intended concept, the term "object" will be qualified, for example, as an "OOPS object" or a "repository object".

The following are some distinctions between an OOPS and repository objects.

| OOPS Objects | Repository Objects |
|---|---|
| (1)  fine grained | (1)  large composite groupings of data |
| (2)  RAM-oriented, quick access, short persistence | (2)  long-term guaranteed states |
| (3)  not concurrent across applications | (3)  concurrent across applications and systems |
| (4)  simple object states | (4)  complex state definitions |

For further detail, reference should be made to Pinson and Wiener, "Introduction to Object Oriented Programming and Smalltalk", copyright 1988 by Addison-Wesley Publishing Co. For the current state of an OOPS in the patent literature, reference should be made to Duisberg, U.S. Patent 4,821,220, "System for Animating Program Operation and Displaying Time-based Relationships", issued April 11, 1989.

A repository and its management constitute a "data base of specifications" which express complex semantics. The repository supports the specification of specification types, dependencies, and constraints; access to specification instances; and enforcement of said dependencies and constraints.

A "repository function" is a construct providing access to repository services and data. It includes built-in functions, interactive functions, and mini-specs. A "mini-spec" is a process at the lowest level of decomposition which has plural input data views and a single output view.

A "policy" is an association of a repository function with data. A repository-wide policy is one defined on a Conceptual View, while a tool-specific policy is one defined only on a Logical View.

The repository is operable in two domains comprising, respectively, "specification processing" and "runtime services".

Specification processing proceeds by grouping assertions into related models of data and functions. These models are further grouped into higher level categories termed "views". Data is modelled in the "Conceptual View" as entities, attributes, and relationships. In this view, functions are modelled as policies and methods.

Runtime services are classified into three major groups: data services, user services, and system services. The data services support access to repository data under the control of the specifications made in the Logical View, Conceptual View, and Storage View for data. Runtime services include the enforcement of policies (including execution of derivation policies and triggering of trigger policies), protection of resources through the enforcement of security policies, and assurance of the integrity of data through the enforcement of integrity policies.

Viewed from one aspect the invention provides a repository-based method for recursively prototyping a required repository data design from a list of application-provided objects (entities, relationships, or aggregations), the repository providing an information set including entity-relationship definitions and occurrences, the information set being represented by an aggregation wherein each aggregation has an entity-relationship hierarchy consisting of a root identity and zero or more relationships, comprising the steps of:

(a) responsive to an application-provided functional specification for object generation, dynamically and recursively forming and populating templates from occurrences in said application-provided information; and

(b) generating an executable function or functional specification from the template trees using a default logic specification.

The invention provides a method for rapidly prototyping and testing repository data designs in a layered architecture of applications and a repository.

The method of the invention uses automatic programming and repository available information in the form of entity-relationship definitions and occurrences as provided by applications running on top of said repository.

An unexpected advantage of the invention is that the method of the invention can recursively prototype a required repository data design from a list of application-provided objects (entities, relationships, or aggregations). In this regard, the repository provides an information set including entity-relationship definitions and occurrences. Relatedly, the information set is represented by an aggregation wherein each aggregation has an entity-relationship hierarchy consisting of a root identity and zero or more relationships.

Viewed form a second aspect the invention provides a repository-based method for the generation of executable functions and functional specifications from a list of application-provided objects (entities, relationships, or aggregations), in aid of prototyping and testing repository data designs, a repository being an information set including entity-relationship definitions and occurrences, the information set being represented by an aggregation, each aggregation having an entity-relationship hierarchy consisting of a root identity and zero or more relationships, comprising the steps of:

(a) accessing the repository to obtain the specified list of objects over a callable interface;

(b) constructing template trees from the objects and obtaining confirmation from the application, each template in the template trees being a construct of defined fields representing an application's view of entity occurrence data; and

(c) generating an executable function or functional specification from the template trees using a default logic specification.

In preferred embodiments of the invention the steps of constructing trees from objets further includes the steps in constructing each template of:

(b1) at a first point in time, defining the number and types of fields for a template, and associating the template with an entity and each field with an entity attribute; and

(b2) at a second point in time, selectively either populating or amending the population of an entity using the template.

As previously mentioned, the Borta patent describes application program generation of a storage file access method. Responsive to application/user-supplied parameters, Borta generated files and descriptors. Also, Borta used associated file CREATE, READ, WRITE, and DELETE macros. Execution of the Borta code permits the manipulation of file/data base contents. In contrast, the method of the invention effectuates code generation by copying named objects from a repository, expanding each object (in template form), and modulating an external REXX EXEC with each expanded object. The result is executable code.

Note, the method of the invention does not execute any of the generated code. This is performed only at the instance of applications. Second, none of the generated code in the inventive method in any way relates to a storage access method. In the layered architecture in which this invention is invoked, such functions are performed by a DBMS or equivalent.

Ceccon et al., U.S. Patent 4,622,633, "Object Building Method for Self Configuring Computer Network", issued November 11, 1986, relates to the reconfiguration of a network in which entity-attribute descriptors of hardware interfaces access prestored software templates involved in the reconstruction of software objects. In Ceccon, each reconstructed object, upon invocation, executes a function associated with the counterpart interface. To the contrary, the inventive method responds to a functional specification for object generation in which the templates are both formed and populated from occurrences in the supplied information. The templates are not prestored in the sense of Ceccon, but are formed dynamically.

Fig. 1 depicts the gross structure of the repository application generator.

Fig. 2 depicts a dialog screen for invoking the application generator.

Fig. 3 illustrates a conceptual view involving entities and relationships.

Fig. 4 depicts a dialog screen for invoking the application generator, with example input.

Fig. 5 depicts an application generator screen which permits adjustment of the generated application's "logical data view".

Fig. 6 depicts a generated application's screen.

Fig. 7 shows the processing, as driven by function keys.

Fig. 8 depicts the E/R model of the Repository Manager Conceptual View constructs.

Fig. 9 depicts the E/R model of the Repository Manager Logical View constructs.

The invention can be conveniently practised in a general purpose computer having a multitasking operating system. Illustratively, an IBM/360 or 370 architected CPU using the IBM MVS operating system with the time-share option TSO would suffice. Note, an IBM/360 architected CPU is fully described in Amdahl et al., U.S. Patent 3,400,371, "Data Processing System", issued September 3, 1968.

The MVS operating system with the TSO option is set out in IBM publication GC28-1150, "MVS/Extended Architecture System Programming Library: System Macros and Facilities", Vol. 1. Details of standard MVS or other operating system services such as lock management, subsystem invocation by interrupt or monitor, and the posting and waiting of tasks is omitted. These OS services are believed well appreciated by those skilled in the art.

As previously explained, a "repository" is an organized, shared collection of information relating to data processing constructs. The function of the management of such a repository is to apply three independently expressed "views" (conceptual, logical, and storage) to the tasks of specifying, implementing, and sharing repository information to application-specifiable functions.

The "Conceptual View" is an abstract E/R model of data and functions. The "Logical View" is that part of the E/R model, data, and functions in which the data is described by templates and template trees. The E/R function is derived from processing logic and policies. Lastly, the "Storage View" treats the mapping of entities and relationships into the underlying DBMS or storage system.

The "Conceptual View" permits specification of types of entities and relationships, and types of objects. The data body of the object can be either external or internal to the repository. In the internal case, the data consists of instances of entities and relationships. An entity instance is uniquely identified by its key attribute value. An object instance is uniquely identified by its object name, which is a combination of key attribute values. One of the attribute values making up an object instance name is the object type name.

For a specific type of object, one can specify the names of methods which will operate on the object data body instances. The methods themselves are examples of Repository Manager functions specified in the Logical View. The name of a Repository Manager function to be used as a method is the name that is specified in the Conceptual View for an object type.

For example, if an object type is FORTRAN SOURCE and the method is COMPILE, then there is a Repository Manager function in the Logical View whose name is COMPILE. Its interface is specified in terms of its parameter template, where the template is a record specification with fields specified. These fields are the input and output parameters of that function. For the COMPILE example, there may be three or four input parameters which are fields in the parameter template for the COMPILE function. The values returned are also fields in the parameter template for the COMPILE function.

The method can have multiple implementations which vary by object type. If the object type is FORTRAN SOURCE and the method is COMPILE, then the method implementation is a specific FORTRAN compiler. If the method is COMPILE and the object type is COBOL SOURCE, then the method implementation would be a specific COBOL compiler.

These method implementations themselves are also specified to the Repository Manager as instances of Repository Manager functions. In the FORTRAN case, there would be a Repository Manager function whose name would be FORTRAN COMPILER XYZ, which would have its own input and output parameters expressed in its parameter template. When a repository application calls the COMPILE method for a particular object whose type is FORTRAN SOURCE, the Repository Manager derives the fact that the implementation is a FORTRAN compiler function and gives it control of the CPU, passing the parameter template to it.

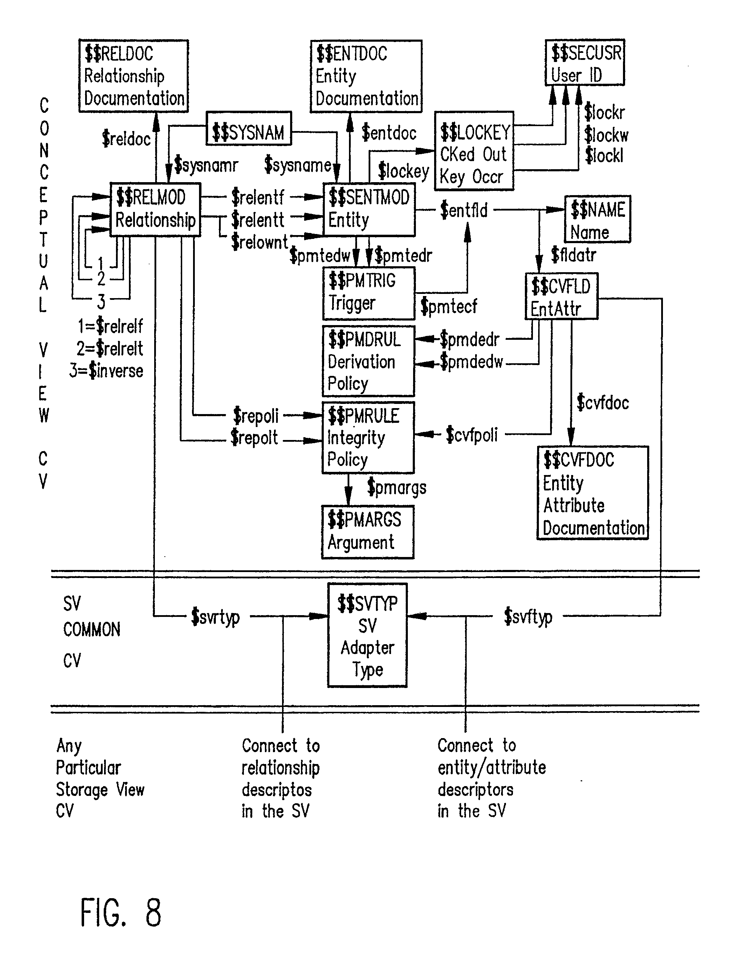

For purposes of completeness, reference should be made to Fig. 8, which depicts a conceptual and storage view of the functional relations among modules in the following illustrative example. A detailed explanation is believed recited implicitly in the discussion of the other figures.

An Illustrative Example

In this example, extensive use is made of acronyms and other mnemonic devices by which modules call, reference, or relate to one another. For instance, the Repository-based Repository Application Generator is denominated "RBRAG". Functions 1 and 3 are abbreviated as "FUNHLD1" and "FUNHLD3", etc.

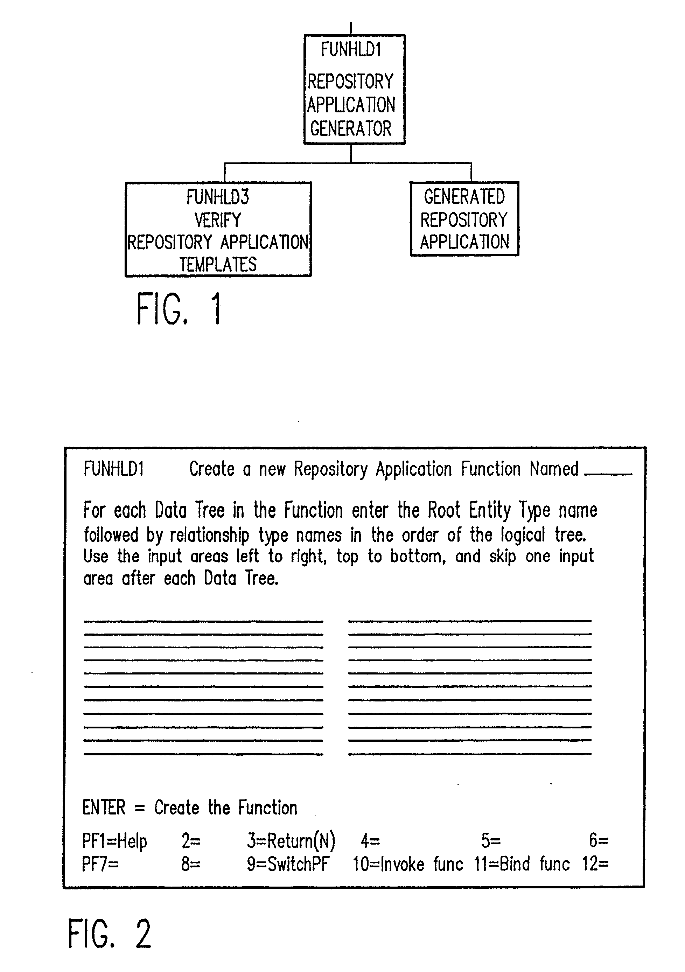

Referring now to Fig. 1, there is shown that RBRAG can be variously invoked as an invocation of the function FUNHLD1. FUNHLD1 includes an end-user interactive panel through which a dialog can be maintained. This function, after it generates a repository function, invokes FUNHLD3. In turn, FUNHLD3 displays the template trees that were generated by FUNHLD1, permitting the end user to verify and amend the tree structure. Subsequently, the end user can instruct FUNHLD1 to invoke the Repository Manager binder which will bind the function specification that was generated. The output of the binder is an executable Repository Manager function. That Repository Manager function then can be invoked directly from FUNHLD1, and is represented in the lower righthand box of Fig. 1 labelled Generated Repository Application.

Referring now to Fig. 2, there is shown an end-user dialog panel. In the upper lefthand corner can be seen FUNHLD1 by convention. On the full-screen panel in the upper lefthand corner is displayed the name of the function for which this panel is running.

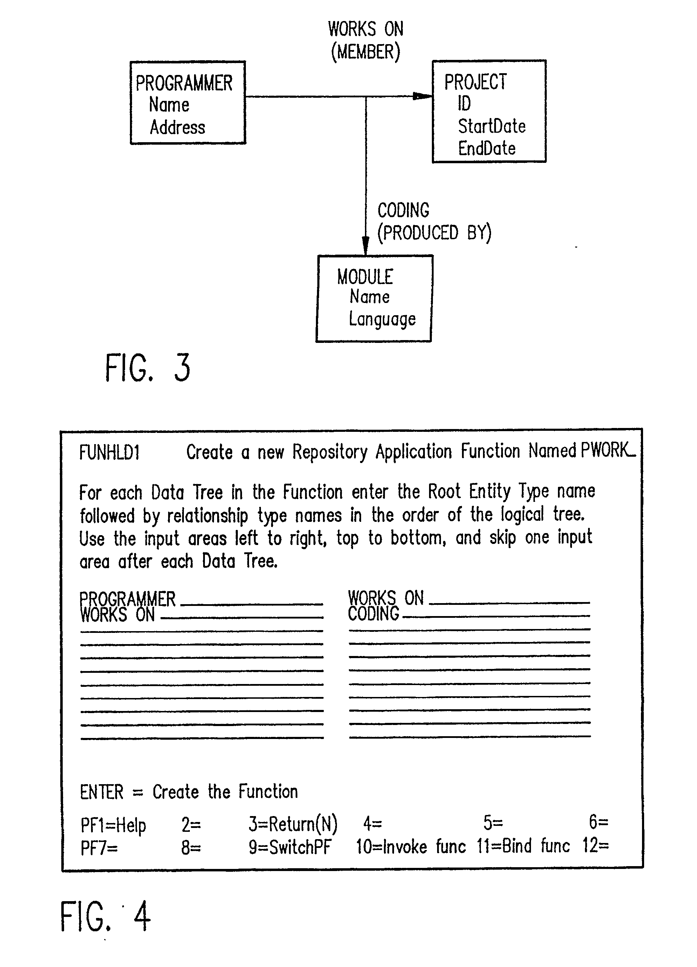

Referring now to Fig. 3, there is shown a small E/R diagram (Conceptual View) modelling PROGRAMMERs, PROJECTs, and MODULEs. Also modelled are the facts that a PROGRAMMER WORKS ON a PROJECT, a PROJECT has as a MEMBER a PROGRAMMER, a PROGRAMMER WORKS ON a PROJECT CODING a MODULE, and a MODULE is PRODUCED BY a PROGRAMMER who WORKS ON a PROJECT.

Now suppose it was desired to generate a repository application function (call it PWORK) where one displays PROGRAMMER NAMEs WORKING ON PROJECTs. Referring to Fig. 4, there is a tree structure consisting of PROGRAMMER and down one line is simply WORKS ON. Down another line would be WORKS ON PROJECT and CODING MODULE. On the first screen, the FUNHLD1 screen, in the first input field at the top, follow the prompt "Create a New Repository Application Function named _____. In the blank space, type "PWORK" since that is the name decided on for the generated function. At the first set of input fields following that, first type "PROGRAMMER". That is the name of the root entity type. The next input field, which is the one off to the right, type "WORKS ON", which is the name of the relationship to follow. Then move the cursor to the next field and type "WORKS ON" again. Move the cursor to the next field and type "CODING", then press ENTER to "Create the Function".

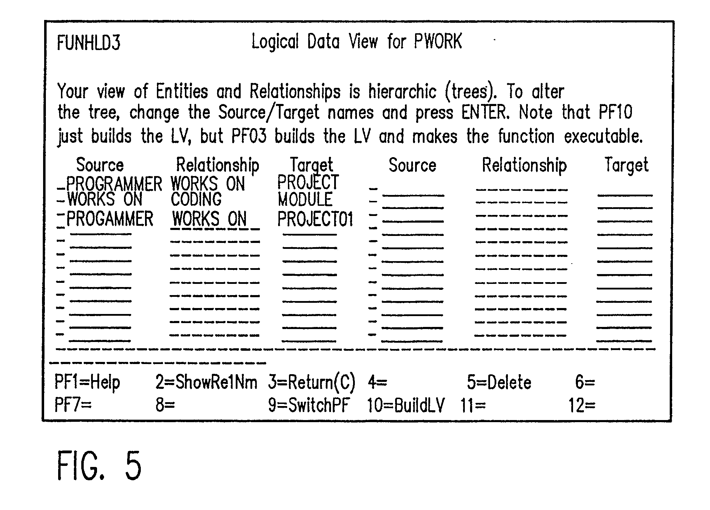

The next thing that will happen is that the screen in Fig. 5 for FUNHLD3 will appear on an interactive terminal coupling the mainframe computer host. The top of the screen recites "Logical Data View for PWORK". In the tableized structure labeled Source, Relationship, and Target, on the first line under Source will be displayed PROGRAMMER, under Relationship will be WORKS ON, and under Target will be PROJECT. On the second line under Source will be WORKS ON, under Relationship will be CODING, and under Target will be MODULE. On the third line under Source will be PROGRAMMER, under Relationship will be WORKS ON, and under Target will be PROJECT01.

FUNHLD3 is actually displaying the generated template tree hierarchy or hierarchies in the case of multiple template trees. The names of the sources and targets are either the names of the generated templates or the names of the relationships that one is being given a view of. In this example, PROGRAMMER as a source was a generated template name and PROJECT as a target was a generated template name. WORKS ON is a relationship, MODULE is a generated template name, and PROJECT01 is a generated template name. CODING is an example of a relationship that comes from a relationship to an entity, so the source of CODING is logically the relationship WORKS ON. The template name PROJECT01 was generated because the template name PROJECT could not be used again since it was already being used as a view of the entity type PROJECT within this function PWORK.

RBRAG assumes a default in that the first leg is defined by the nodes PROGRAMMER to PROJECT to MODULE, while the second leg is defined by PROGRAMMER to PROJECT. The tree may be altered such that the first leg is PROGRAMMER to PROJECT and the second leg is PROGRAMMER to PROJECT to MODULE by overtyping the Source and Target fields on the screen for FUNHLD3. When the template tree has been corrected, FUNHLD3 then returns to FUNHLD1. In FUNHLD1, PWORK may be bound yielding a fully executable repository application.

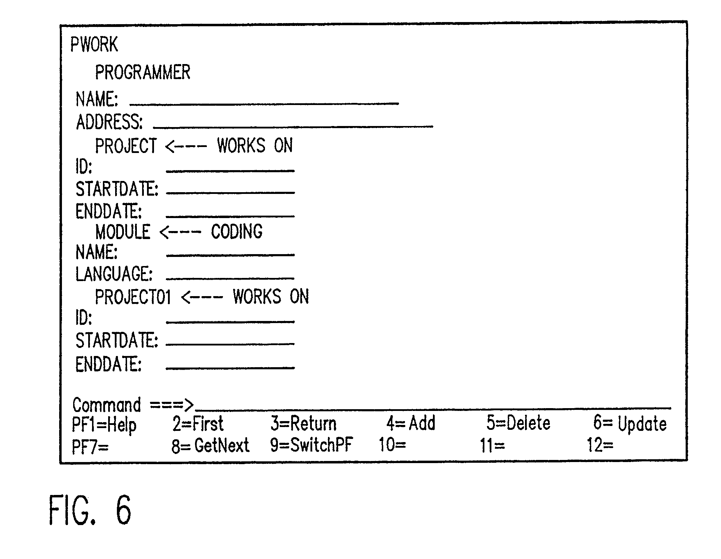

The repository application just consists of one function; namely, PWORK. Invocation of PWORK and the generated repository application, similar to that shown in Fig. 6, would be displayed complete with input and output fields, and a representation of the template trees. As a convenience, assignable program function (PF) keys can facilitate operator-driven invocation of the steps.

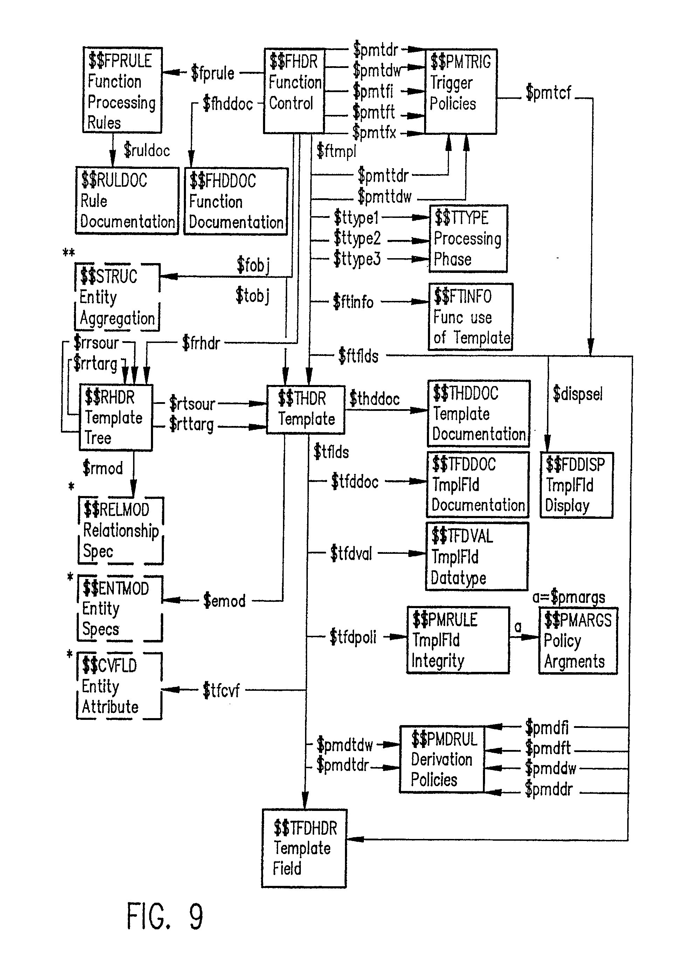

Referring now to Fig. 9, there is set out the fact that RBRAG creates an instance of entity $$FHDR. That instance has a key attribute value of PWORK since that is what the user specified as the name of the application function. There will be multiple instances of entity $$THDR, which represents templates, with the relationship $FTMPL from $$FHDR to $$THDR. $FTMPL represents the inclusion of templates. There will be at least an instance of $$THDR for PROGRAMMER, PROJECT, MODULE, and PROJECT01. Those templates for PROGRAMMER, PROJECT, MODULE, and PROJECT01 will have an instance of $$TFDHDR, which are template fields, for every attribute of the entity types PROGRAMMER, PROJECT, and MODULE. The $$THDR for PROGRAMMER will have a relationship to entity $$ENTMOD, which represents entities, for the entity type PROGRAMMER; and the $$THDR for PROJECT will have the relationship $EMOD to $$ENTMOD for instance PROJECT. $EMOD represents the fact that a template views instances of a particular entity type. There will be a $$THDR for instance MODULE with a relationship $EMOD to the $$ENTMOD for instance MODULE, and a $$THDR for instance PROJECT01 with a $EMOD relationship to $$ENTMOD for instance PROJECT.

In this example, there is one $$ENTMOD instance, PROJECT, with two $$THDR instances, PROJECT and PROJECT01, which are two separate views of the PROJECT entities. The template tree branches are views of the relationships WORKS ON and CODING, and again WORKS ON. The example has three branches in its template tree, and those are three instances of entity $$RHDR with the associated relationships $RTSOUR and $RTTARG. In this example, a tree branch from a relationship to a template is illustrated by the CODING relationship which goes from WORKS ON to MODULE. That is an example of $$RHDR which has one of the "circular" relationships $$RRSOUR to another $$RHDR.

Each one of the generated template fields has a generated instance of the entity type $$TFDVAL, which represents the template field data type and length. These are derived by virtue of FUNHLD1 reading the associated entity $$CVFLDS, which represents the entity attribute defaults within the corresponding entity specification. This is an example of a generator using the default data characteristics that are stored in the repository as instances of $$CVFLD.

FUNHLD1 also generates the default display panel, and the output of that phase of its execution has instances of entity $$FDDISP and the associated relationships $FTFLDS and $DISPSEL. FUNHLD1, as currently implemented, does not generate any policies in the Logical View so the generated repository application does not have any Logical View policies. However, the generated repository application will operate under the constraints of any Conceptual View policies which may have been specified by the Conceptual View designer. In the example, the person who designed the entity types PROGRAMMER, PROJECT, and MODULE and the relationship types WORKS ON and CODING could have specified policies on them. The execution of PWORK will be subject to the constraints imposed by those policies.

The default set of function processing rules is generated by FUNHLD1 and has instances of the entity $$FPRULE. They are related to the $$FHDR instance PWORK via the relationship $FPRULE, which represents the fact that a function processing rule is used, indicating the order in which they are to be processed.

Referring again to Fig. 9, there is shown the output of RBRAG. It always creates an instance of $$FHDR. It creates instances of $$THDR and $$TFDHDR, which specify the templates that the generated function needs in order to execute as a proper repository application. It provides a default set of function processing rules in $$FPRULE, and the same set is used for all generated Repository Manager functions. The function processing rules use facilities of the Repository Manager, termed "built-in functions", that are sufficiently generic or sufficiently general so that they work well in supporting the ability to retrieve, browse, update, create, delete, commit, restore, and display repository information in ways that are tailored to a specific repository application's needs.

As previously mentioned, the process of automatic programming using interactively supplied information or choices can be assisted through the use of programmable function keys. A typical assignment is set out in Fig. 4.

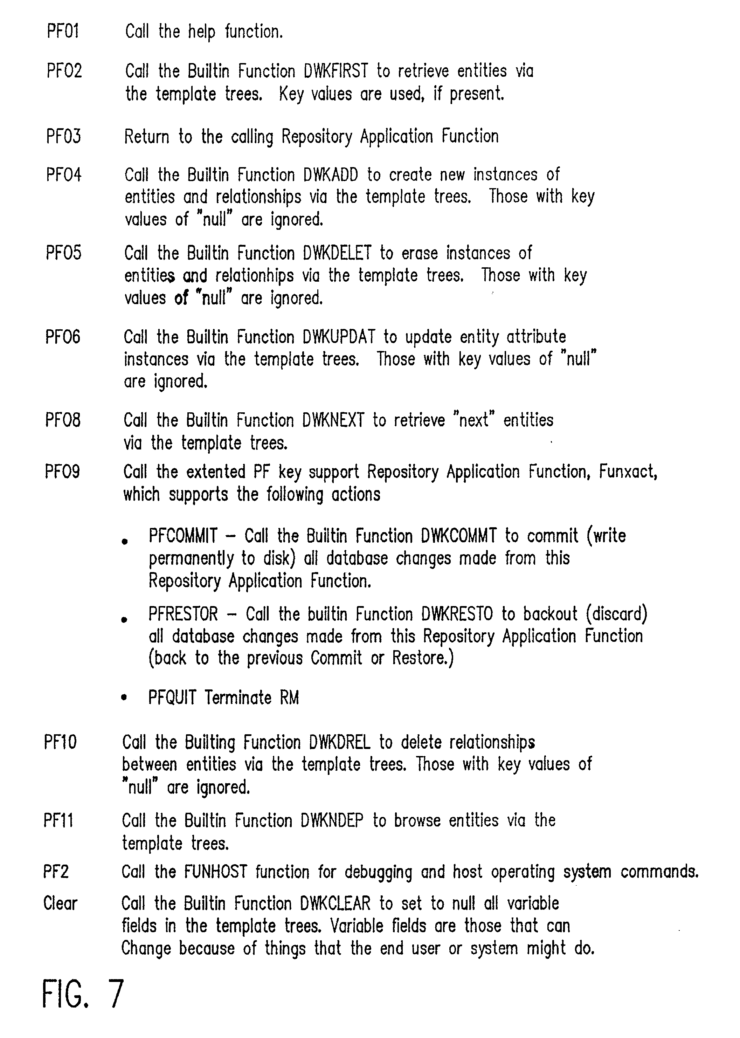

Referring now to Fig. 7, the function keys are designated as PF01 - PF12. For example, stroking the function key PF02 will result in a call to the built-in function DWKFIRST. DWKFIRST will retrieve entities through the template trees in this function. In other words, in the example, the function is PWORK and the template tree is PROGRAMMER to PROJECT to MODULE and PROGRAMMER to PROJECT01.

The built-in function DWKFIRST looks at the fields in the templates which correspond to the key attributes of those entities. If the end user had typed values for those keys through the screen, then those values are used with keyed retrievals. For example, if the end user had typed the name of the programmer (say that the name of the programmer was the key of the entity type PROGRAMMER), then DWKFIRST would issue a keyed retrieval on the template PROGRAMMER. If, on the other hand, there was no value typed for PROGRAMMER NAME, i.e., it was null, then an unqualified retrieval would have been issued for the template PROGRAMMER and whichever one was the first programmer would have been retrieved.

The built-in function DWKFIRST walks its way down the template tree from top to bottom. As it finds templates with key fields filled in, it issues keyed retrievals; otherwise, it issues unqualified FIRST retrievals until it has fully progressed along all the template trees in this particular function. The unqualified FIRST retrieval returns the first entity record that is related via an instance of the relationship type viewed by the template tree branch. In the case of processing PF02, when DWKFIRST finishes its treewalk and finishes doing the retrievals, it returns. The next function processing rule that is processing PF02 returns back to the top of the function and the panel is redisplayed. The end result, of course, is that the screen is rebuilt and redisplayed to the end user showing the results of the DWKFIRST retrieval. If the end user had typed in names of programmers and names of projects and modules, those would have been retrieved specifically; otherwise, unconditional retrievals would have been done.

The function key PF04 provides the end user with the ability to create new instances of PROGRAMMERS, PROJECTS, and MODULES by typing in the key values for the new instances and the other attributes of those entities. By typing those values and pressing PF04, new instances of the entities and relationships will be generated by the built-in function DWKADD. DWKADD will progress along the template trees using the same treewalk algorithm that DWKFIRST uses. For those templates whose key fields are not in a null state, adds will be issued; and for those pairs of templates in the template trees whose key fields are in a nonnull state, a relationship to create calls will be issued.

PF05 allows the end user to delete instances of entities and relationships through the user's view. The treewalk is done using the same treewalk algorithm as used by DWKFIRST.

PF06 supports the ability for end users to update entity attribute instances via the template trees. The built-in function DWKUPDAT is used, and it uses the same treewalk algorithm. As usual, those templates with key field values of null are ignored and are not used for updates.

PF08 is used by the end user to do sequential retrievals. The built-in function DWKNEXT is called by the function processing rules which implement the PF08 logic. DWKNEXT does an unqualified retrieval of the next entity record at the root of the template tree and then walks to every subordinate template issuing unqualified FIRST retrievals, which retrieve the first related entity record.

PF09 is used by the end user to go to a separate control screen from which commands or PF keys can be used to do such things as commit the repository changes to the DBMS, i.e., Database 2, discard the changes, or terminate the entire session.

PF10 is used by the end user to invoke the built-in function DWKDREL, which will delete relationship instances but will not delete entity instances. Again, the same rules apply in terms of the user indicating which templates are to participate and which treewalk algorithm will be used.

PF11 invokes the Repository Manager built-in function DWKNDEP ("next dependent"). DWKNDEP goes to the very bottom or the end of each leg of each template tree and issues a NEXT at that level. If there is no NEXT, then it backs up one level in the template tree and issues a NEXT at that level. If that succeeds, then it goes back down and issues an unqualified FIRST at the lower level. This processing goes on recursively until either no retrievals succeed or all retrievals succeed. What it will not do is back up all the way to the very root of the template tree. It processes only from the first dependent level on down.

The key PA2 can be used by the end user to call the function that is named FUNHOST to allow the end user to do debugging and tracing types of operations, and invoke the native host operating system commands.

## Claims

1.  A repository-based method for recursively prototyping a required repository data design from a list of application-provided objects (entities, relationships, or aggregations), the repository providing an information set including entity-relationship definitions and occurrences, the information set being represented by an aggregation wherein each aggregation has an entity-relationship hierarchy consisting of a root identity and zero or more relationships, comprising the steps of:

    (a) responsive to an application-provided functional specification for object generation, dynamically and recursively forming and populating templates from occurrences in said application-provided information; and

    (b) generating an executable function or functional specification from the template trees using a default logic specification.

2.  A repository-based method for the generation of executable functions and functional specifications from a list of application-provided objects (entities, relationships, or aggregations), in aid of prototyping and testing repository data designs, a repository being an information set including entity-relationship definitions and occurrences, the information set being represented by an aggregation, each aggregation having an entity-relationship hierarchy consisting of a root identity and zero or more relationships, comprising the steps of:

    (a) accessing the repository to obtain the specified list of objects over a callable interface;

    (b) constructing template trees from the objects and obtaining confirmation from the application, each template in the template trees being a construct of defined fields representing an application's view of entity occurrence data; and

9

(c) generating an executable function or functional specification from the template trees using a default logic specification.

3. The method according to claim 2, wherein the steps of constructing trees from objects further includes the steps in constructing each template of:
   (b1) at a first point in time, defining the number and types of fields for a template, and associating the template with an entity and each field with an entity attribute; and
   (b2) at a second point in time, selectively either populating or amending the population of an entity using the template.

```
                    ┌──────────────────┐
                    │  FUNHLD1         │
                    │                  │
                    │ REPOSITORY       │
                    │ APPLICATION      │
                    │ GENERATOR        │
                    └──────────────────┘
              ┌──────────────┴──────────────┐
┌──────────────────────────┐      ┌────────────────────┐
│    FUNHLD3               │      │  GENERATED         │
│    VERIFY                │      │  REPOSITORY        │
│ REPOSITORY APPLICATION   │      │  APPLICATION       │
│    TEMPLATES             │      └────────────────────┘
└──────────────────────────┘
```

# FIG. 1

┌───────────────────────────────────────────────────────────────┐
│ FUNHLD1      Create a new Repository Application Function Named ____ │
│                                                               │
│ For each Data Tree in the Function enter the Root Entity Type name │
│ followed by relationship type names in the order of the logical tree. │
│ Use the input areas left to right, top to bottom, and skip one input │
│ area after each Data Tree.                                     │
│                                                               │
│   _____      _____      │
│   _____      _____      │
│   _____      _____      │
│   _____      _____      │
│   _____      _____      │
│   _____      _____      │
│   _____      _____      │
│   _____      _____      │
│   _____      _____      │
│                                                               │
│ ENTER = Create the Function                                   │
│                                                               │
│ PF1=Help    2=      3=Return(N)   4=           5=        6=    │
│ PF7=        8=      9=SwitchPF   10=Invoke func 11=Bind func 12= │
└───────────────────────────────────────────────────────────────┘

# FIG. 2

WORKS ON
(MEMBER)

```
┌─────────────┐              ┌─────────────┐
│ PROGRAMMER  │              │  PROJECT    │
│ Name        │─────────────▶│  ID         │
│ Address     │      │       │  StartDate  │
└─────────────┘      │       │  EndDate    │
                     │       └─────────────┘
                     │
                     │   CODING
                     │   (PRODUCED BY)
                     ▼
              ┌─────────────┐
              │  MODULE     │
              │  Name       │
              │  Language   │
              └─────────────┘
```

# FIG. 3

```
┌──────────────────────────────────────────────────────────────────┐
│ FUNHLD1      Create a new Repository Application Function Named     │
│              PWORK_                                                 │
│                                                                    │
│ For each Data Tree in the Function enter the Root Entity Type name │
│ followed by relationship type names in the order of the logical    │
│ tree. Use the input areas left to right, top to bottom, and skip   │
│ one input area after each Data Tree.                               │
│                                                                    │
│ PROGRAMMER _____          WORKS ON _____               │
│ WORKS ON _____            CODING _____                 │
│ _____                     _____                        │
│ _____                     _____                        │
│ _____                     _____                        │
│ _____                     _____                        │
│ _____                     _____                        │
│ _____                     _____                        │
│ _____                     _____                        │
│                                                                    │
│ ENTER = Create the Function                                        │
│                                                                    │
│ PF1=Help    2=      3=Return(N)  4=          5=          6=         │
│ PF7=        8=      9=SwitchPF   10=Invoke func 11=Bind func 12=    │
└──────────────────────────────────────────────────────────────────┘
```

# FIG. 4

```
┌─────────────────────────────────────────────────────────────────────────────┐
│ FUNHLD3                    Logical Data View for PWORK        ·                │
│                                                                               │
│ Your view of Entities and Relationships is hierarchic (trees). To alter       │
│ the tree, change the Source/Target names and press ENTER. Note that PF10      │
│ just builds the LV, but PF03 builds the LV and makes the function executable.  │
│    Source       Relationship    Target      Source      Relationship    Target│
│ _PROGRAMMER  WORKS ON        PROJECT     _           _____       _____ │
│ -WORKS ON    CODING          MODULE      -           _____       _____ │
│ _PROGAMMER   WORKS ON_       PROJECT01   -           _____       _____ │
│ -           _____      _____     -           _____       _____ │
│ -           _____      _____     -           _____       _____ │
│ -           _____      _____     -           _____       _____ │
│ -           _____      _____     -           _____       _____ │
│ -           _____      _____     -           _____       _____ │
│ ────────────────────────────────────     ─────────────────────────────────── │
│ ────────────────────────────────────                                          │
│ PF1=Help     2=ShowRelNm  3=Return(C)  4=          5=Delete       6=           │
│ PF7=         8=           9=SwitchPF   10=BuildLV  11=            12=           │
└─────────────────────────────────────────────────────────────────────────────┘
```

# FIG. 5

```
PWORK
   PROGRAMMER
NAME: _____
ADDRESS: _____
   PROJECT <--- WORKS ON
ID:         _____
STARTDATE: _____
ENDDATE:    _____
   MODULE <--- CODING
NAME:      _____
LANGUAGE:  _____
   PROJECT01 <--- WORKS ON
ID:         _____
STARTDATE: _____
ENDDATE:    _____

Command ===>_____
PF1=Help    2=First    3=Return    4= Add    5=Delete    6= Update
PF7=        8= GetNext 9=SwitchPF  10=       11=         12=
```

FIG. 6

PF01     Call the help function.

PF02     Call the Builtin Function DWKFIRST to retrieve entities via
         the template trees.  Key values are used, if present.

PF03     Return to the calling Repository Application Function

PF04     Call the Builtin Function DWKADD to create new instances of
         entities and relationships via the template trees.  Those with key
         values of "null" are ignored.

PF05     Call the Builtin Function DWKDELET to erase instances of
         entities and relationhips via the template trees.  Those with key
         values of "null" are ignored.

PF06     Call the Builtin Function DWKUPDAT to update entity attribute
         instances via the template trees.  Those with key values of "null"
         are ignored.

PF08     Call the Builtin Function DWKNEXT to retrieve "next" entities
         via the template trees.

PF09     Call the extented PF key support Repository Application Function, Funxact,
         which supports the following actions

         •  PFCOMMIT — Call the Builtin Function DWKCOMMT to commit (write
            permanently to disk) all database changes made from this
            Repository Application Function.

         •  PFRESTOR — Call the builtin Function DWKRESTO to backout (discard)
            all database changes made from this Repository Application Function
            (back to the previous Commit or Restore.)

         •  PFQUIT Terminate RM

PF10     Call the Builting Function DWKDREL to delete relationships
         between entities via the template trees. Those with key values of
         "null" are ignored.

PF11     Call the Builtin Function DWKNDEP to browse entities via the
         template trees.

PF2      Call the FUNHOST function for debugging and host operating system commands.

Clear    Call the Builtin Function DWKCLEAR to set to null all variable
         fields in the template trees. Variable fields are those that can
         Change because of things that the end user or system might do.

# FIG. 7

FIG. 8

FIG. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | ELECTRO 1988 CONFERENCE RECORD vol. 13, 10-12 may 1988, pages 1-5, Los Angeles, CA, US; B.L. RUBENSTEIN: "The Future of Software Development with Case" * the whole document * | 1-3 | G 06 F 15/40<br>G 06 F 9/44 |
| A | COMPUTER vol. 19, no. 1, January 1986, pages 50-62, New York, US; S. NAVATHE et al.: "Integrating User Views in Database Design" * the whole document * | 1-3 | |

TECHNICAL FIELDS SEARCHED (Int. Cl.5)

G 06 F

The present search report has been drawn up for all claims

| Place of search | Date of completion of the search | Examiner |
|---|---|---|
| BERLIN | 20-09-1990 | ABRAM R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)